# EUROPEAN PATENT SPECIFICATION

(11) **EP 4 276 983 B1**
(45) Date of publication and mention of the grant of the patent: **12.11.2025**
(21) Application number: 22837985.5
(22) Date of filing: 06.07.2022
(51) Int. Cl.: H01M 10/6551, H01M 10/613, H01M 10/6556, H01M 10/6567, H01M 10/625, H01M 50/30, H01M 50/358, H01M 50/375, H01M 50/249, H01M 10/647, B60L 50/64

(54) **BATTERY PACK INCLUDING PACK CASE FITTED WITH COOLING FINS**
BATTERIEPACK MIT EINEM MIT KÜHLRIPPEN AUSGESTATTETEN PACKGEHÄUSE
BLOC-BATTERIE AYANT UN BOÎTIER DE BLOC ÉQUIPÉ D'AILETTES DE REFROIDISSEMENT

(30) Priority: 07.07.2021 KR 20210089364
(43) Date of publication of application: 15.11.2023
(73) Proprietor: LG Energy Solution, Ltd., Seoul 07335 (KR)
(72) Inventor: KIM, Seung-Joon, Daejeon 34122 (KR); CHI, Ho-June, Daejeon 34122 (KR)
(74) Representative: Plasseraud IP
(86) International application number: PCT/KR2022/009788
(87) International publication number: WO 2023/282633

(56) References cited:
- EP-B1- 3 042 403
- WO-A1-2020/181705
- CN-U- 209 133 578
- JP-A- 2010 049 942
- JP-B2- 5 760 713
- KR-A- 20170 015 141
- KR-B1- 101 908 441
- US-A1- 2014 154 541
- US-A1- 2017 033 343
- US-A1- 2020 321 670
- US-B2- 8 399 112

## Description

### TECHNICAL FIELD

The present application claims priority to Korean Patent Application No. 10-2021-0089364 filed on July 7, 2021 in the Republic of Korea.

The present disclosure relates to a battery pack, and more specifically, to a battery pack for lowering the temperature and pressure of a high-temperature venting gas when the high-temperature venting gas is generated in some battery modules.

### BACKGROUND ART

A secondary battery is attracting attention as a new energy source to improve eco-friendliness and energy efficiency in that it has not only a primary advantage of dramatically reducing the use of fossil fuels, but also no by-products generated from the use of energy.

Accordingly, the application of a secondary battery to various devices is increasing. For example, it is widely used not only as an energy source for wireless mobile devices or wearable devices, which are multifunctional small products, but also as an energy source for electric vehicles and hybrid electric vehicles presented as alternatives to conventional gasoline and diesel vehicles or as an energy storage system (ESS).

In general, each secondary battery has an operating voltage of about 2.5 V to 4.5 V. Therefore, in the case of an electric vehicle or an energy storage system requiring large capacity and high output, a battery module in which a plurality of secondary batteries are connected in series and/or in parallel and a battery pack in which the battery modules are connected in series and/or in parallel are configured and then used as an energy source.

Depending on the output or capacity of a battery pack required for an electric vehicle, the number of lithium secondary batteries included in one battery module may increase or the number of battery modules included in one battery pack may increase.

However, as the number of battery modules constituting the battery pack increases, the possibility of fire and explosion and their resultant damage may surely increase.

For example, when an event such as a short circuit between lithium secondary batteries or an abnormal temperature rise occurs in some battery modules, a large amount of venting gas may be generated in the lithium secondary batteries, and if deterioration becomes severe, high-temperature sparks including electrode active material and aluminum particles, as well as venting gas, may be ejected. At this time, the venting gas and the high-temperature spark cause thermal damage to the adjacent battery module, which greatly increases the risk of additional events occurring in the other battery modules. In addition, the high-temperature spark and the venting gas may cause thermal damage to surrounding structures or other battery packs even after being discharged to the outside of the battery pack.

Therefore, there is a need for a method for reducing the risk caused by venting gas or high-temperature spark when an event of any battery module occurs.

US 2017/033343, US 2014/154541 and US 8399112 each relates to battery pack configured for managing temperature within a battery pack.

### DISCLOSURE

### Technical Problem

The present disclosure is designed to solve the problems of the related art, and therefore the present disclosure is directed to reducing the risk factor due to emission of a high-temperature venting gas by lowering its temperature and pressure to be discharged to the outside of the battery pack even if the high-temperature venting gas is generated in any battery module.

The present disclosure is also directed to preventing thermal runaway of a battery pack by minimizing thermal damage to other battery modules even if venting gas and sparks are generated in any battery module.

The technical problems to be solved by the present disclosure are not limited to the above-described problems, and other problems not mentioned herein may be clearly understood by those skilled in the art from the following description of the present disclosure.

### Technical Solution

The invention is as defined in the set of claims.

According to the present disclosure, there is provided a battery pack including a battery module; and a pack case provided to accommodate the battery module therein, wherein the pack case includes a bottom cover accommodating the battery module; and a top plate having cooling fins protruding from one surface facing the inside of the pack case and coupled to the bottom cover so that the upper portion of the battery module is covered, wherein the battery pack is configured such that the venting gas generated in the battery module is discharged to the outside of the pack case through empty spaces formed between the cooling fins.

The cooling fins may be provided in plurality from one edge to the other edge of the top plate along a first direction that is a longitudinal direction of the top plate or a second direction that is a widthwise direction of the top plate.

The cooling fins provided on the edge of the top plate may be vertically connected to the upper edge of the bottom cover at the ends thereof.

The bottom cover may include a base plate forming a bottom surface; a wall frame forming a wall along the circumference of the base plate; and a first cross beam partitioning an internal space surrounded by the base plate and the wall frame.

The battery module is in plurality, each of the battery modules is disposed in a plurality of module accommodating portions formed in a state that the internal space is partitioned by the first cross beam, and the top plate may include a second cross beam provided to be vertically in face-to-face contact with the first cross beam.

The second cross beam may be formed to be equal to or higher than the cooling fins.

The battery module may include a plurality of battery cells; and a module case accommodating the plurality of battery cells, wherein the module case may have a gas vent hole formed in an upper plate portion that covers the upper portions of the plurality of battery cells.

The gas vent hole is provided in a mesh structure.

The module case may include an upper plate portion disposed at the top of the plurality of battery cells and having coolant therein; and a lower plate portion disposed at the bottom of the plurality of battery cells and having a flow path through which coolant may flow, wherein the upper plate portion may include a first melting spot capable of being thermally melted on a first upper plate in contact with the plurality of battery cells; a gas vent hole capable of discharging gas to the outside in a second upper plate facing the first upper plate; and a vent hole cap sealing the gas vent hole but made of a material capable of being thermally melted.

The lower plate portion may include a first lower plate in contact with the plurality of battery cells and a second lower plate facing the first lower plate, and a second melting spot capable of being thermally melted on the first lower plate.

The first melting spot and the second melting spot may be vertically symmetrical with at least one battery cell interposed therebetween.

According to another aspect of the present disclosure, there is provided an electric vehicle including the above-described battery pack.

### Advantageous Effects

According to one aspect of the present disclosure, it is possible to reduce the risk factor due to emission of a high-temperature venting gas by lowering its temperature and pressure to be discharged to the outside of the battery pack even if the high-temperature venting gas is generated in any battery module.

According to another aspect of the present disclosure, it is possible to prevent thermal runaway of a battery pack by minimizing thermal damage to other battery modules even if venting gas and sparks are generated in any battery module.

The advantageous effects to be obtained by the present disclosure are not limited to the above-described effects, and other effects not mentioned herein may be clearly understood by those skilled in the art from the following description of the present disclosure.

### DESCRIPTION OF DRAWINGS

FIG. 1 is a schematic perspective view illustrating a battery pack according to an embodiment of the present disclosure.
FIG. 2 is a partially exploded perspective view of the battery pack of FIG. 1.
FIG. 3 is a perspective view of the top plate of FIG. 2 viewed from the bottom.
FIG. 4 is a bottom view of the top plate of FIG. 3.
FIG. 5 is a view corresponding to FIG. 3 and illustrates a modified example of the top plate of FIG. 3.
FIG. 6 a view corresponding to FIG. 4 and illustrates a modified example of the top plate of FIG. 3.
FIG. 7 is a schematic perspective view illustrating a battery module according to an embodiment of the present disclosure.
FIG. 8 is a bottom view of the upper plate portion of the module case of FIG. 7.
FIG. 9 is a cross-sectional view of FIG. 8.
FIG. 10 is a view for explaining a cooling and fire extinguishing system of the battery module of FIG. 7.
FIG. 11 is a reference drawing for describing a fire extinguishing mechanism when a specific battery cell is ignited in a battery module according to an embodiment of the present disclosure.
FIG. 12 is a reference drawing for describing a gas discharge state of a specific battery cell in a battery module according to an embodiment of the present disclosure.
FIG. 13 is a view illustrating an example of venting gas discharge from a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

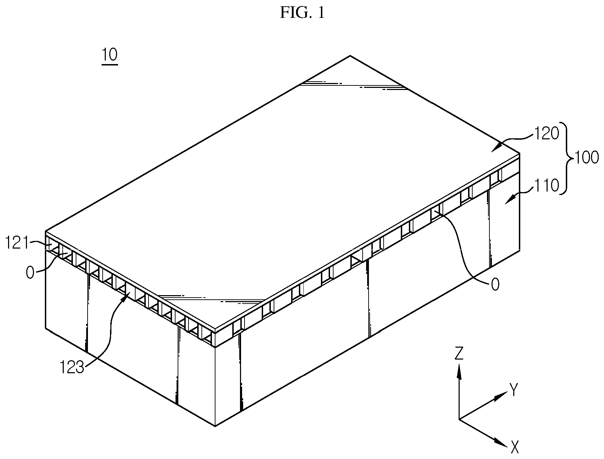

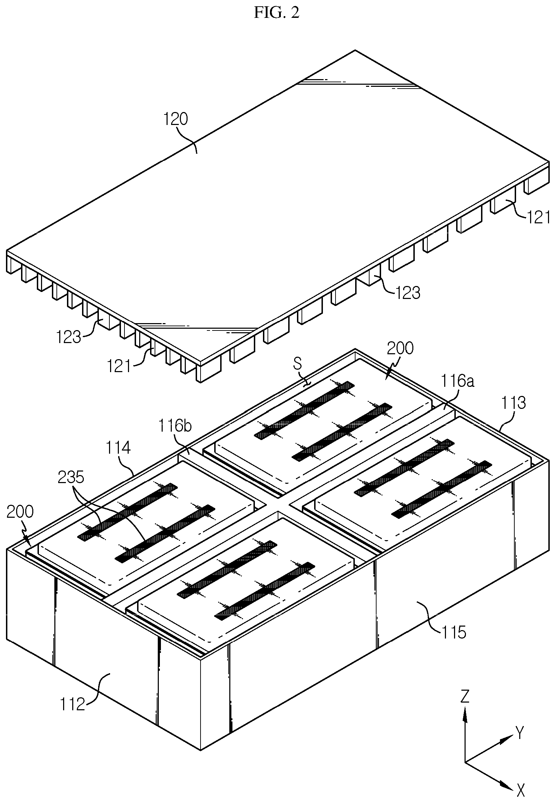

FIG. 1 is a schematic perspective view illustrating a battery pack according to an embodiment of the present disclosure, and FIG. 2 is a partially exploded perspective view of the battery pack of FIG. 1.

The battery pack 10 according to an embodiment of the present disclosure includes a pack case 100 and battery modules 200 accommodated in the pack case 100.

The pack case 100 is a component for protecting the battery modules 200 from external shocks, etc., and may be made of a material having excellent mechanical rigidity. As shown in FIGS. 1 and 2, the pack case 100 may include a bottom cover 110 provided to accommodate the battery modules 200, and a top plate 120 provided to cover the upper portions of the battery modules 200 and be vertically coupled to the bottom cover 110. Although not shown, when the bottom cover 110 and the top plate 120 are coupled, a coupling method such as bolting, welding, bonding, or hooking may be applied.

As will be described later in detail, the pack case 100 of the present disclosure includes cooling fins 121 disposed between the bottom cover 110 and the top plate 120. For example, as shown in FIG. 1, the top plate is supported by the cooling fins to be spaced apart at a predetermined height from the upper end of the bottom cover, thereby ensuring an emission area for discharging the venting gas along the side circumferential direction of the pack case 100 wide enough. Accordingly, even if the venting gas is generated from the battery module 200, the venting gas is smoothly discharged, and thus deformation of the pack case 100 may be prevented. In addition, when the venting gas is discharged to the outside of the pack case 100, it may be cooled by the cooling fins 121, thereby minimizing the risk of ignition of other structures around the battery pack 10.

Hereinafter, the configuration of the pack case 100 will be described in detail.

Referring to FIG. 2, the battery module 200 according to the present embodiment includes a gas vent hole 235 on the upper portion thereof. When a venting gas is generated inside the battery module 200, the venting gas is discharged in the upper direction (Z-axis direction) of the battery module 200 through the gas vent hole 235, and then is blocked by the top plate 120 covering the upper portion of the battery module 200, thereby moving in the horizontal direction. At this time, the temperature of the venting gas may be lowered by exchanging heat with the cooling fins 121 until the venting gas reaches the edge region of the top plate 120. In particular, a vortex phenomenon occurs significantly inside the pack case 100 until the venting gas is discharged to the outside of the pack case 100. Accordingly, the amount of heat exchange between the venting gas and the top plate 120 including the cooling fins 121 increases, so that the temperature of the venting gas may be significantly lowered compared to the case in which the cooling fins 121 are not used. The cooling fins and the top plate may be made of a metal having excellent thermal conductivity, such as aluminum, for cooling the venting gas.

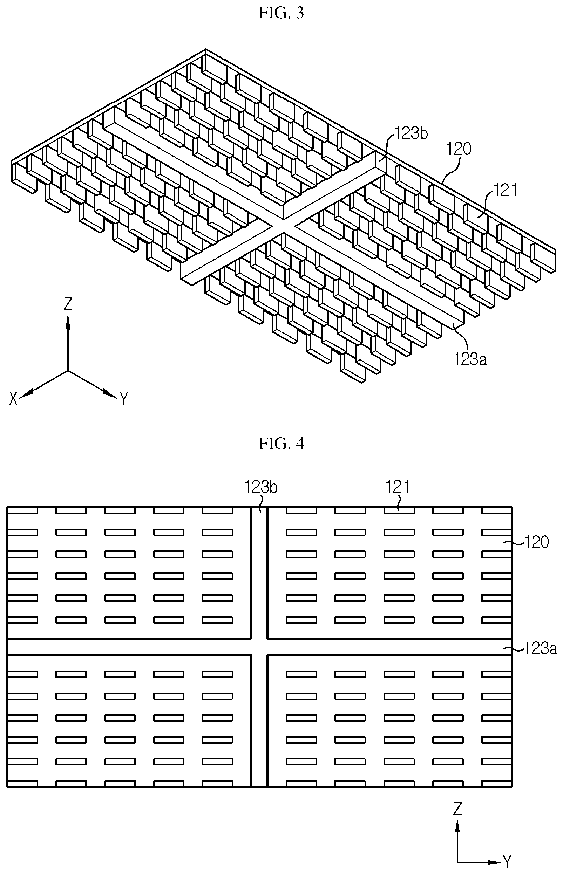

Specifically, each cooling fin 121 according to the present embodiment may be provided in a thin plate shape protruding perpendicularly to one surface of the top plate 120 facing the inner direction (toward the battery module) of the pack case 100, as shown in FIGS. 3 and 4. The cooling fin 121 may be replaced with various shapes, such as a fin shape, a rod shape, or an oval shape, unlike the present embodiment.

In addition, the cooling fins 121 may be configured to be provided in plurality to be spaced apart at a predetermined interval from one edge to the other edge of the top plate 120 along a first longitudinal direction (Y-axis direction) or along a second widthwise direction (X-axis direction). For example, the cooling fins 121 are distributed over the entire area of the top plate 120 except for the area of the second cross beam 123 to be described later, and may include N rows and M columns.

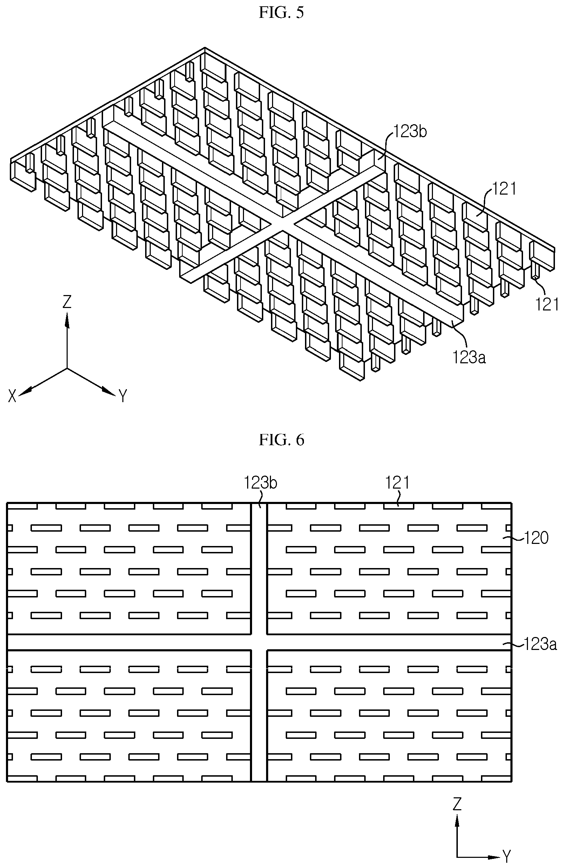

As shown in FIGS. 3 and 4, the cooling fins 121 may be configured such that all rows and columns coincide with each other in every direction, or as shown in FIGS. 5 and 6, they may be configured such that a certain row and another row or a certain column and another column do not coincide with each other in every direction.

The arrangement structure of the cooling fins 121 as shown in FIG. 6 is more complicated in the discharge path of the venting gas compared to that of the cooling fins 121 as shown in FIG. 4, so it may be effective in generating more vortexes. In this regard, the arrangement structure of the cooling fins 121 as shown in FIG. 6 may be more advantageous in increasing the amount of heat dissipation of the venting gas.

Among the cooling fins 121, the cooling fins 121 provided on the edge of the top plate 120 may be configured to be vertically connected to the upper edge of the bottom cover 110 when the top plate 120 is coupled to the bottom cover 110. For example, fin insertion grooves (not shown) are provided on the upper edge of the bottom cover 110, and the ends of the cooling fins 121 are inserted into the fin insertion grooves so that some of the cooling fins 121 may be vertically connected to the upper edge of the bottom cover 110.

As described above, the battery pack 10 according to the present embodiment has a structure where the bottom cover 110 in which the battery modules 200 are accommodated is covered with the top plate 120 with which the cooling fins 121 are fitted. Accordingly, the venting gas generated in the battery module and rising vertically is blocked by the top plate 120, which leads to reduction of the discharge pressure and movement in the lateral direction of the pack case, and in the process of moving in the lateral direction, the venting gas may be cooled by actively exchanging heat with the cooling fins 121 and the top plate 120. The venting gas is discharged to the outside of the pack case 100 through the empty spaces 0 between the outermost cooling fins 121 along the side circumferential direction of the pack case 100.

Meanwhile, the pack case 100 according to an embodiment of the present disclosure further includes the first cross beams 116a, 116b provided in the bottom cover 110 and the second cross beams 123 provided in the top plate 120.

Referring to FIG. 2 again, the bottom cover 110 includes a base plate forming a bottom surface and wall frames 112, 113, 114, 115 forming a wall along the circumference of the base plate, wherein an internal space surrounded by the base plate and the wall frames 112, 113, 114, 115 may be configured to be partitioned by the first cross beams 116a, 116b. That is, as shown in FIG. 2, the first cross beams 116a, 116b include a first horizontal beam 116a and a first vertical beam 116b, wherein the first horizontal beam 116a may be configured such that one end is connected to the front frame 112 and the other end is connected to the rear frame 113, and the first vertical beam 116b may be configured such that one end is connected to the left side frame 114 and the other end is connected to the right side frame 115.

According to the first cross beams 116a, 116b of the present embodiment, four module accommodating portions S may be formed in the bottom cover 110, and each battery module 200 may be disposed in each module accommodating portion S.

Subsequently, referring to FIGS. 3 or 5, the second cross beam 123 includes a second horizontal beam 123a and a second vertical beam 123b formed to be equal to or higher than the cooling fins 121, wherein the second horizontal beam 123a is deposed extending in a first direction (Y-axis direction) on the top plate 120 and the second vertical beam 123b is deposed extending in a second direction (X-axis direction) on the top plate 120, and when the top plate 120 and the bottom cover 110 are vertically coupled, the second horizontal beam 123a and the second vertical beam 123b may be provided to be vertically in face-to-face contact with the first horizontal beam 116a and the first vertical beam 116b, respectively.

Therefore, when the top plate 120 and the bottom cover 110 are vertically coupled, the battery modules 200 may be spatially blocked by the first cross beams 116a, 116b and the second cross beam 123. For reference, in the electrical connection between the battery modules 200, wiring means such as cables or the like are partially embedded in the second cross beam 123 so that the battery modules 200 may be electrically connected by the wiring means.

According to the configuration of the battery pack 10 of the present disclosure, even if a venting gas or spark is generated in any one battery module 200, it is possible to prevent the venting gas or spark from being propagated to other battery modules 200. Therefore, when one battery module 200 is ignited, it is possible to prevent secondary ignition due to a thermal runaway phenomenon caused by heat propagation to other adjacent battery modules 200.

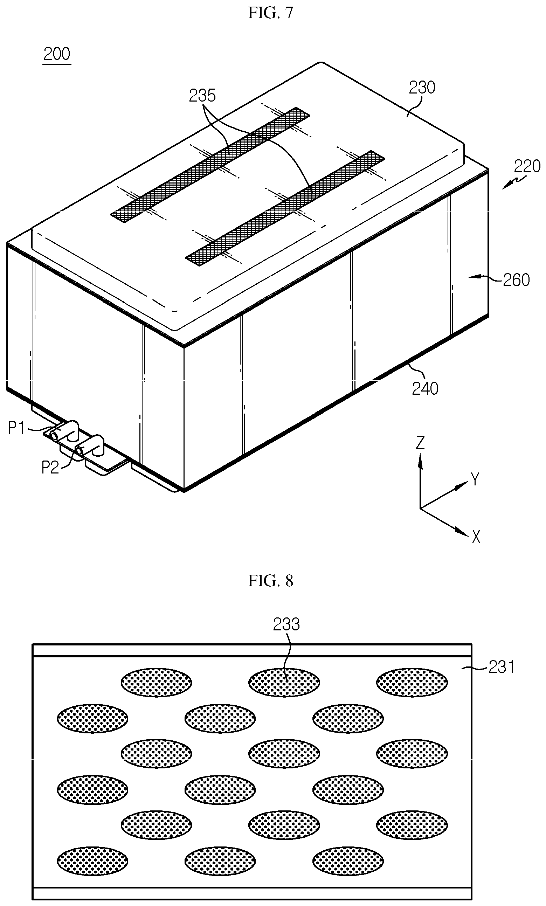

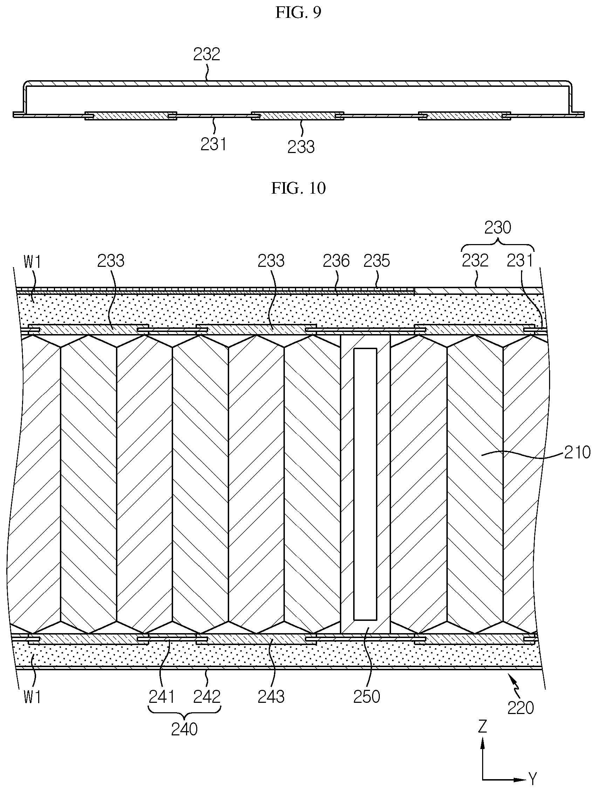

FIG. 7 is a schematic perspective view illustrating a battery module according to an embodiment of the present disclosure, FIG. 8 is a bottom view of the upper plate portion of the module case of FIG. 7, FIG. 9 is a cross-sectional view of FIG. 8, and FIG. 10 is a view for explaining a cooling and fire extinguishing system of the battery module of FIG. 7.

Hereinafter, a battery module according to an embodiment of the present disclosure will be described in detail with reference to these drawings.

The battery module 200 according to an embodiment of the present disclosure includes a cell stack including a plurality of battery cells 210 and a module case 220 accommodating the cell stack.

A pouch-type battery cell 210 may be employed as the battery cell 210. The pouch-type battery cell 210 is a substantially plate-shaped battery cell 210 in which an electrode assembly and an electrolyte are sealed and accommodated with a pouch-type exterior material, and since it is well known at the time of application for the present disclosure, a detailed description thereof will be omitted.

Each of the pouch-type battery cells 210 is respectively erect in an up-down direction (±Z) and stacked in a left-right direction (±Y) with wide sides facing each other to form a cell stack. A buffer pad or a thin plate-shaped cooling fin may be further interposed between the pouch-type battery cells 210 for the purpose of absorbing swelling or transferring heat.

The battery cells 210 may be expanded due to the expansion and contraction of the electrode assembly in the process of repeated charge/discharge, and gas generated as a byproduct of charge/discharge. At this time, in order to absorb the expansion force of the battery cells 210 and minimize deformation of the module case 220, a partition wall 250 having a hollow structure may be added between the battery cells 210.

In particular, the battery module 200 of the present embodiment may be configured to cool the battery cells 210 by fixing the upper edge and the lower edge of the battery cells 210 to the module case with a thermally conductive adhesive, respectively and allowing the coolant W1 to indirectly contact the module case.

The module case 220 may be made of a material having high mechanical rigidity to accommodate the cell stack and protect it from external impact or vibration, and may be provided in an approximately hexahedral box shape. For example, as shown in FIG. 7, the module case 220 of the present embodiment may be configured in an approximately hexahedral box shape including an upper plate portion 230 disposed on the upper portion of the cell stack, a lower plate portion 240 disposed on the lower portion of the cell stack, and four side walls 260 surrounding the circumference of the cell stack. Although schematically illustrated, the side wall 260 may be a combination of four plates including a front/rear surface cover plate covering the front and rear surface portions of the cell stack, and a pair of side plates covering the side portions of the cell stack.

The module case 220 may be configured such that the upper plate portion 230 serves as a coolant storage tank and the lower plate portion 240 serves as a heat sink in order to effectively cool the battery cells 210 in normal times and quickly suppress the ignition of the battery cells 210 in case of a fire. Here, the heat sink refers to a cooling component used to absorb heat by having a flow path through which the coolant W1 may flow therein.

That is, since the battery module 200 according to the present embodiment has its upper portion of a coolant storage tank and its lower portion of a heat sink, it is possible that the battery module 200 may be cooled in normal times and water from the coolant storage tank may be injected into the battery module 200 in an emergency.

Hereinafter, the cooling and fire extinguishing structure of the battery module 200 will be described in detail.

Referring to FIGS. 8 to 10, the upper plate portion 230 of the module case 220 includes a first upper plate 231 in contact with a plurality of battery cells 210, and a second upper plate 232 facing the first upper plate 231. In addition, the first upper plate 231 may include a plurality of first melting spots 233 that can be thermally melted, and the second upper plate 232 may include a gas vent hole 235 through which gas can be discharged to the outside and a vent hole cap 236 formed of a material capable of being thermally melted while sealing the gas vent hole 235.

The first upper plate 231 may be made of aluminum (Al) having excellent thermal conductivity, and the second upper plate 232 may be made of steel having excellent rigidity. The first upper plate 231 and the second upper plate 232, which are made of different materials, may be heterogeneously bonded by, for example, brazing welding.

As described above, the upper plate portion 230 having a structure in which the first upper plate 231 made of aluminum and the second upper plate 232 made of steel are heterogeneously bonded is advantageous in that its heat absorption rate with respect to the battery cells 210 is high and its durability against high-temperature venting gas or sparks is excellent. However, the scope of the present disclosure is not limited to the heat sink heterogeneously bonded with aluminum and steel. That is, when manufacturing the upper plate portion 230, both the first upper plate 231 and the second upper plate 232 may be made of aluminum for ease and weight reduction in the manufacturing process, or other materials that are lightweight and have excellent rigidity in addition to aluminum.

The lower plate portion 240 of the module case 220 may include a first lower plate 241 in contact with the plurality of battery cells 210 and a second lower plate 242 facing the first lower plate 241, and a second melting spot 243 capable of being thermally melted on the first lower plate 241.

The lower plate portion 240 may include a flow path through which the coolant may flow, and an inlet port P1 and an outlet port P2 may be connected to one side and the other side of the flow path for circulation of the coolant. Accordingly, the coolant W1 may be supplied to the flow path through the inlet port P1 and discharged to the outside through the outlet port P2.

As described above, according to the configuration that the upper plate portion 230 and the lower plate portion 240 include coolant therein and are in contact with both end edges of the battery cells 210, both edge portions of the battery cells 210 may be cooled.

That is, the battery cells 210 may be cooled through a heat dissipation path leading to "the upper edge of the battery cells 210 => the first upper plate 231 made of aluminum of the upper plate portion 230 => the coolant W1" and a heat dissipation path leading to "the lower edge of the battery cells 210 = > the first lower plate 241 made of aluminum of the lower plate portion 240 => the coolant W1".

Next, the configuration of the fire extinguishing system of the battery module 200 will be described.

When the temperature of a certain battery cell 210 rises abnormally or it is ignited, the first melting spot 233 of the upper plate portion 230 and the second melting spot 243 of the lower plate portion 240 are melted to let the coolant stored in the upper plate portion 230 flow into the module case 220, which may be used to extinguish the battery cell 210.

The first melting spot 233 and the second melting spot 243 may be vertically symmetrical with at least one battery cell 210 interposed therebetween, and may have substantially the same configuration.

In the present embodiment, the first melting spot 233 may include a through hole 237 formed in the thickness direction of the first upper plate 231 and a sealing cap formed of a material capable of being thermally melted, and the second melting spot 243 may include a through hole and a sealing cap like the first melting spot 233.

As a material of the sealing cap, a plastic resin such as polyethylene (PE) or polypropylene (PP) may be used. For example, the sealing cap made of a plastic material and the first upper plate 231 or the first lower plate 241 made of the above-described aluminum material may be integrally molded by an insert injection method. The sealing cap may be replaced with another material such as rubber having heat meltability and sealing properties.

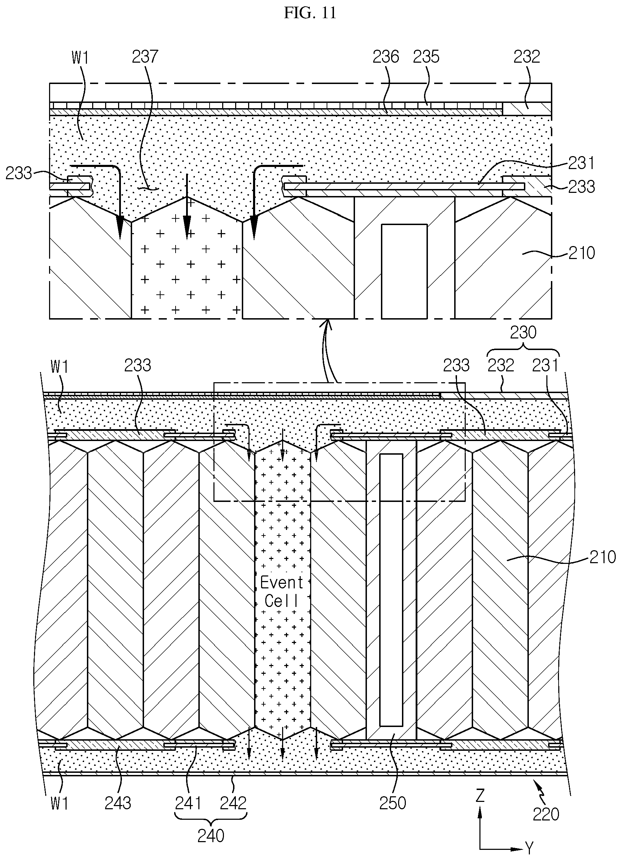

According to the above configuration, as shown in FIG. 11, when a certain battery cell 210 is ignited, the sealing caps located on the upper and lower portions of the corresponding battery cell 210 are thermally melted and lost by heat generated in the corresponding battery cell 210 and high-temperature venting gas, and accordingly, the coolant W1 from the upper plate portion 230 is directly introduced into the corresponding battery cell 210 through the through hole. In this case, the initially ignited battery cell 210 may be quickly extinguished, and thus it is effective in preventing heat diffusion to the surrounding battery cells 210.

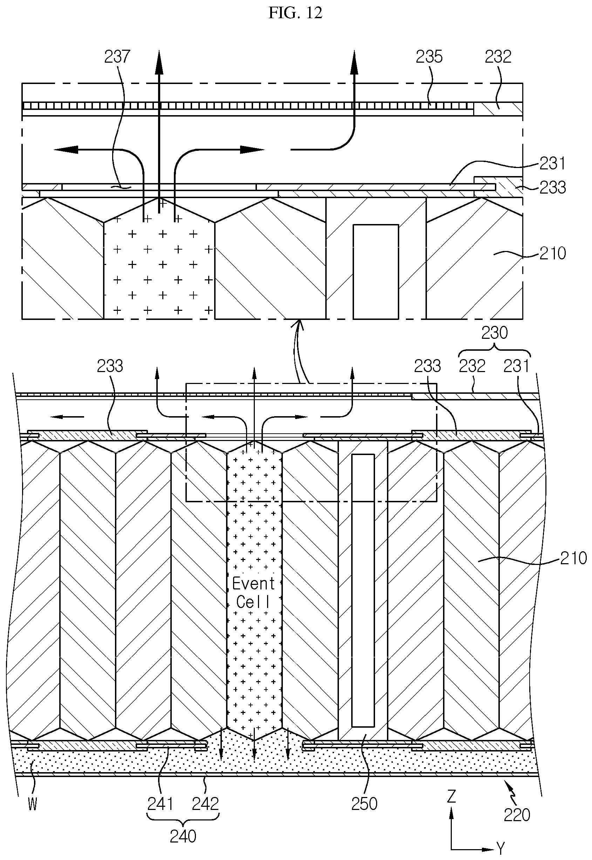

In addition, as shown in FIG. 12, a venting gas and a high-temperature spark may be introduced into the internal space of the upper plate portion 230 from which the coolant is discharged. At this time, the venting cap 236 blocking the gas vent hole 235 may be thermally melted or lost, and thus the gas vent hole 235 may be opened. Since the gas vent hole 235 is provided in a mesh structure, high-temperature sparks are filtered out and only the venting gas may be discharged to the outside of the upper plate portion 230. Here, the high-temperature sparks refer to an active material deintercalated from an electrode inside the battery cell 210 or molten aluminum particles.

That is, when the battery cell 210 is ignited, after the coolant W1 is introduced into the corresponding battery cell 210 through the through hole from the inside of the upper plate portion 230, the inside of the upper plate portion 230 becomes an empty space. At this time, the empty space created in the upper plate portion 230 is used as a gas discharge passage. When the high-temperature venting gas and sparks enter the inside of the upper plate portion 230 through the through hole 237 and then the vent hole cap 236 is thermally melted and lost, the venting gas may be rapidly discharged to the outside through the gas vent hole 235 due to the pressure difference between the inside and outside of the module case 220. At this time, flames or sparks may disappear due to a decrease in temperature or may be filtered through the gas vent hole 235 having a mesh structure.

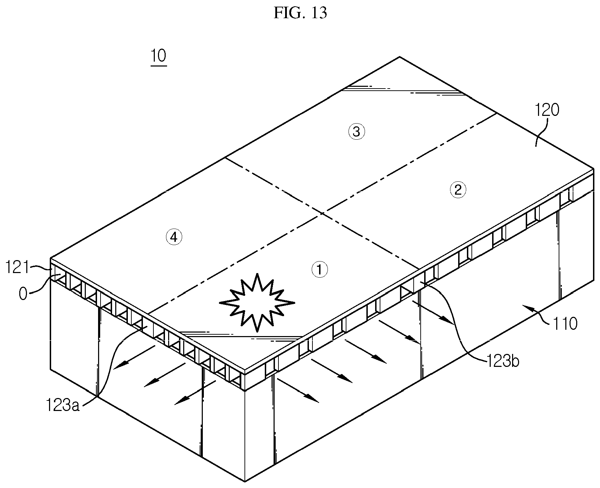

As shown in FIG. 13, the venting gas that comes out of the battery module 200 through the gas vent hole 235 may be discharged to the outside of the pack case 100.

As described above, in the present embodiment, four battery modules 200 are accommodated in the pack case 100 in a state where they are spatially blocked by the first cross beams 116a, 116b of the bottom cover 110 and the second cross beam 123 of the top plate 120. Thus, as shown in FIG. 13, the venting gas generated in the battery module 200 located in the ① region may not be diffused into the ②, ③, ④ regions inside the pack case 100 but may be discharged to the outside of the pack case 100 in a state where the temperature is reduced.

As described above, according to the configuration of the battery pack 10 of the present disclosure, even if a high-temperature venting gas is generated in any battery module 200, the temperature and pressure are lowered so that it may be discharged to the outside of the battery pack 10, thereby reducing a risk factor due to venting gas emission. In addition, it is possible to prevent thermal runaway of the battery pack 10 by minimizing thermal damage to other battery modules 200.

Meanwhile, although not shown, the battery pack 10 according to the present disclosure may further include various devices for controlling charge/discharge of the battery modules 200, for example, a battery management system (BMS), a current sensor, a fuse, and the like.

The battery pack according to the present disclosure may be applied to a vehicle such as an electric vehicle or a hybrid vehicle. That is, the vehicle according to the present disclosure may include the battery pack according to the present disclosure. The battery pack may be installed in a vehicle body frame or a trunk space under a vehicle seat, and may be disposed in a state where the top plate of the pack case is turned upside down, if necessary when installed in the vehicle.

The terms indicating directions as used herein such as upper, lower, left, right, front and rear are used for convenience of description only, and it is obvious to those skilled in the art that the terms may change depending on the position of the stated element or an observer.

While the present disclosure has been hereinabove described with regard to a limited number of embodiments and drawings, the present disclosure is not limited thereto and it is obvious to those skilled in the art that a variety of modifications and changes may be made thereto within the scope of the appended claims

## Claims

1. A battery pack (10) comprising:
a battery module (200); and
a pack case (100) provided to accommodate the battery module (200) therein,
wherein the pack case (100) comprises:
a bottom cover (110) accommodating the battery module (200); and
a top plate (120) having cooling fins (121) protruding from one surface facing the inside of the pack case (100) and coupled to the bottom cover (110) so that the upper portion of the battery module (200) is covered,
wherein the battery pack (10) is configured such that the venting gas generated in the battery module (200) is discharged to the outside of the pack case through empty spaces formed between the cooling fins (121),
wherein the cooling fins (121) are provided in plurality from one edge to the other edge of the top plate (120) along a first direction that is a longitudinal direction of the top plate (120) and a second direction that is a widthwise direction of the top plate (120).

2. The battery pack (10) according to claim 1,
wherein the cooling fins (121) provided on the edge of the top plate (120) are vertically connected to the upper edge of the bottom cover (110) at the ends thereof.

3. The battery pack (10) according to claim 1,
wherein the bottom cover (110) comprises:
a base plate forming a bottom surface;
a wall frame (112, 113, 114, 115) forming a wall along the circumference of the base plate; and
a first cross beam (116a, 116b) partitioning an internal space surrounded by the base plate and the wall frame (112, 113, 114, 115).

4. The battery pack (10) according to claim 3,
wherein the battery module (200) is in plurality,
each of the battery modules (200) is disposed in a plurality of module accommodating portions formed in a state that the internal space is partitioned by the first cross beam (116a, 116b), and
the top plate (120) comprises a second cross beam (123a, 123b) provided to be vertically in face-to-face contact with the first cross beam (116a, 116b).

5. The battery pack (10) according to claim 4,
wherein the second cross beam (123a, 123b) is formed to be equal to or higher than the cooling fins (121).

6. The battery pack (10) according to claim 1,
wherein the battery module (200) comprises:
a plurality of battery cells (210); and
a module case (220) accommodating the plurality of battery cells (210),
wherein the module case (220) has a gas vent hole (235) formed in an upper plate portion (230) that covers the upper portions of the plurality of battery cells (210).

7. The battery pack (10) according to claim 6,
wherein the gas vent hole (235) is provided in a mesh structure.

8. The battery pack (10) according to claim 6,
wherein the module case (220) comprises:
an upper plate portion (230) disposed at the top of the plurality of battery cells (210) and having coolant (W1) therein; and
a lower plate portion (240) disposed at the bottom of the plurality of battery cells (210) and having a flow path through which coolant (W1) may flow,
wherein the upper plate portion (230) comprises a first melting spot capable of being thermally melted on a first upper plate (231) in contact with the plurality of battery cells (210); a gas vent hole (235) capable of discharging gas to the outside in a second upper plate (232) facing the first upper plate (231); and a vent hole cap (236) sealing the gas vent hole (235) but made of a material capable of being thermally melted.

9. The battery pack (10) according to claim 8,
wherein the lower plate portion (240) comprises a first lower plate (241) in contact with the plurality of battery cells (210) and a second lower plate (242) facing the first lower plate (241), and a second melting spot capable of being thermally melted on the first lower plate (241).

10. The battery pack (10) according to claim 9,
wherein the first melting spot and the second melting spot are vertically symmetrical with at least one battery cell interposed therebetween.

11. A vehicle comprising the battery pack (10) according to any one of claims 1 to 10.

## Patentansprüche

1. Batteriepack (10), umfassend:
ein Batteriemodul (200); und
ein Pack-Gehäuse (100), welches dazu bereitgestellt ist, das Batteriemodul (200) darin aufzunehmen,
wobei das Pack-Gehäuse (100) umfasst:
eine Bodenabdeckung (110), welche das Batteriemodul (200) aufnimmt; und
eine obere Platte (120), welche Kühlrippen (121) aufweist, welche von einer Oberfläche hervorstehen, welche der Innenseite des Pack-Gehäuses (100) zugewandt ist, und welche mit der Bodenabdeckung (110) gekoppelt ist, sodass der obere Abschnitt des Batteriemoduls (200) abgedeckt ist,
wobei der Batteriepack (10) dazu eingerichtet ist, dass das im Batteriemodul (200) erzeugte Entlüftungsgas zu der Außenseite des Pack-Gehäuses durch leere Räume, welche zwischen den Kühlrippen (121) gebildet sind, abgeführt wird,
wobei die Kühlrippen (121) in einer Mehrzahl von einem Rand zu dem anderen Rand der oberen Platte (120), entlang einer ersten Richtung, welche eine longitudinale Richtung der oberen Platte (120) ist, und einer zweiten Richtung bereitgestellt sind, welche eine Breitenrichtung der oberen Platte (120) ist.

2. Batteriepack (10) nach Anspruch 1,
wobei die Kühlrippen (121), welche an dem Rand der oberen Platte (120) bereitgestellt sind, an den Enden davon vertikal mit dem oberen Rand der Bodenabdeckung (110) verbunden sind.

3. Batteriepack (10) nach Anspruch 1,
wobei die Bodenabdeckung (110) umfasst:
eine Grundplatte, welche eine Bodenfläche bildet;
einen Wandrahmen (112, 113, 114, 115), welcher eine Wand entlang des Umfangs der Grundplatte bildet; und
einen ersten Querträger (116a, 116b), welcher einen Innenraum aufteilt, welcher von der Grundplatte und dem Wandrahmen (112, 113, 114, 115) umgeben ist.

4. Batteriepack (10) nach Anspruch 3,
wobei das Batteriemodul (200) in einer Mehrzahl ist,
wobei jedes der Batteriemodule (200) in einer Mehrzahl von Modul-Aufnahmeabschnitten angeordnet ist, welche in einem Zustand gebildet sind, in welchem der Innenraum durch den ersten Querträger (116a, 116b) aufgeteilt ist, und
wobei die obere Platte (120) einen zweiten Querträger (123a, 123b) umfasst, welcher dazu bereitgestellt ist, dass er vertikal in Flächenkontakt mit dem ersten Querträger (116a, 116b) steht.

5. Batteriepack (10) nach Anspruch 4,
wobei der zweite Querträger (123a, 123b) gebildet ist, um gleich hoch oder höher als die Kühlrippen (121) zu sein.

6. Batteriepack (10) nach Anspruch 1,
wobei das Batteriemodul (200) umfasst:
eine Mehrzahl von Batteriezellen (210); und
ein Modulgehäuse (220), welches die Mehrzahl von Batteriezellen (210) aufnimmt,
wobei das Modulgehäuse (220) ein Gasentlüftungsloch (235) aufweist, welches in einem oberen Plattenabschnitt (230) gebildet ist, welcher den oberen Abschnitt der Mehrzahl von Batteriezellen (210) abdeckt.

7. Batteriepack (10) nach Anspruch 6,
wobei das Gasentlüftungsloch (235) in einer Maschenstruktur bereitgestellt ist.

8. Batteriepack (10) nach Anspruch 6,
wobei das Modulgehäuse (220) umfasst:
einen oberen Plattenabschnitt (230), welcher an der Oberseite der Mehrzahl von Batteriezellen (210) angeordnet ist und Kühlmittel (W1) darin aufweist; und
einen unteren Plattenabschnitt (240), welcher an dem Boden der Mehrzahl von Batteriezellen (210) angeordnet ist und einen Strömungsweg aufweist, durch welchen Kühlmittel (W1) fließen kann,
wobei der obere Plattenabschnitt (230) einen ersten Schmelzpunkt, welcher dazu in der Lage ist, thermisch geschmolzen zu werden, an einer ersten oberen Platte (231), welche mit der Mehrzahl von Batteriezellen (210) in Kontakt ist;
ein Gasentlüftungsloch (235), welches dazu in der Lage ist, das Gas zu der Außenseite hin abzuführen, in einer zweiten oberen Platte (232), welche der ersten oberen Platte (231) zugewandt ist; und
eine Entlüftungsloch-Kappe (236) umfasst, welche das Gasentlüftungsloch (235) abdichtet, aber aus einem Material hergestellt ist, welches dazu in der Lage ist, thermisch geschmolzen zu werden.

9. Batteriepack (10) nach Anspruch 8,
wobei der untere Plattenabschnitt (240) eine erste untere Platte (241), welche mit der Mehrzahl von Batteriezellen (210) in Kontakt steht, und
eine zweite untere Platte (242), welche der ersten unteren Platte (241) zugewandt ist,
und einen zweiten Schmelzpunkt, welcher dazu in der Lage ist, thermisch geschmolzen zu werden, an der ersten unteren Platte (241), umfasst.

10. Batteriepack (10) nach Anspruch 9,
wobei der erste Schmelzpunkt und der zweite Schmelzpunkt vertikal symmetrisch sind, mit wenigstens einer dazwischen angeordneten Batteriezelle.

11. Fahrzeug, umfassend den Batteriepack (10) nach einem der Ansprüche 1 bis 10.

## Revendications

1. Bloc-batterie (10) comprenant :
un module (200) de batterie ; et
un boîtier (100) de bloc prévu pour recevoir le module (200) de batterie en son sein, dans lequel le boîtier (100) de bloc comprend :
un couvercle inférieur (110) recevant le module (200) de batterie ; et
une plaque supérieure (120) présentant des ailettes de refroidissement (121) faisant saillie à partir d'une surface orientée vers l'intérieur du boîtier (100) de bloc et accouplée au couvercle inférieur (110) de sorte que la partie supérieure du module (200) de batterie soit recouverte,
dans lequel le bloc-batterie (10) est configuré de sorte que le gaz de ventilation généré dans le module (200) de batterie soit évacué vers l'extérieur du boîtier de bloc à travers des espaces vides formés entre les ailettes de refroidissement (121),
dans lequel les ailettes de refroidissement (121) sont prévues en pluralité d'un bord à l'autre bord de la plaque supérieure (120) le long d'une première direction qui est une direction longitudinale de la plaque supérieure (120) et d'une seconde direction qui est une direction dans le sens de la largeur de la plaque supérieure (120).

2. Bloc-batterie (10) selon la revendication 1,
dans lequel les ailettes de refroidissement (121) prévues sur le bord de la plaque supérieure (120) sont reliées verticalement au bord supérieur du couvercle inférieur (110) au niveau de ses extrémités.

3. Bloc-batterie (10) selon la revendication 1,
dans lequel le couvercle inférieur (110) comprend :
une plaque de base formant une surface inférieure ;
un cadre (112, 113, 114, 115) de paroi formant une paroi le long de la circonférence de la plaque de base ; et
une première poutre transversale (116a, 116b) séparant un espace interne entouré par la plaque de base et le cadre (112, 113, 114, 115) de paroi.

4. Bloc-batterie (10) selon la revendication 3,
dans lequel le module (200) de batterie est en pluralité,
chacun des modules (200) de batterie est disposé dans une pluralité de parties de réception de module formées dans un état dans lequel l'espace interne est divisé par la première poutre transversale (116a, 116b), et
la plaque supérieure (120) comprend une seconde poutre transversale (123a, 123b) prévue pour être verticalement en contact face-à-face avec la première poutre transversale (116a, 116b).

5. Bloc-batterie (10) selon la revendication 4,
dans lequel la seconde poutre transversale (123a, 123b) est formée pour être égale ou supérieure aux ailettes de refroidissement (121).

6. Bloc-batterie (10) selon la revendication 1,
dans lequel le module (200) de batterie comprend :
une pluralité d'éléments (210) de batterie ; et
un boîtier (220) de module configuré pour contenir la pluralité d'éléments (210) de batterie ;
dans lequel le boîtier (220) de module présente un orifice (235) de ventilation de gaz formé dans une partie (230) plaque supérieure qui recouvre les parties supérieures de la pluralité d'éléments (210) de batterie.

7. Bloc-batterie (10) selon la revendication 6,
dans lequel l'orifice (235) de ventilation de gaz est prévu dans une structure maillée.

8. Bloc-batterie (10) selon la revendication 6,
dans lequel le boîtier (220) de module comprend :
une partie (230) plaque supérieure disposée au sommet de la pluralité d'éléments (210) de batterie et ayant un liquide de refroidissement (W1) en son sein ; et
une partie (240) plaque inférieure disposée au fond de la pluralité d'éléments (210) de batterie et présentant un trajet d'écoulement à travers lequel le liquide de refroidissement (W1) peut s'écouler,
dans lequel la partie (230) plaque supérieure comprend un premier point de fusion apte à être fondu thermiquement sur une première plaque supérieure (231) en contact avec la pluralité d'éléments (210) de batterie ; un orifice (235) de ventilation de gaz apte à évacuer du gaz vers l'extérieur dans une seconde plaque supérieure (232) faisant face à la première plaque supérieure (231) ; et un capuchon (236) d'orifice de ventilation obturant l'orifice (235) de ventilation de gaz mais composé d'un matériau apte à être fondu thermiquement.

9. Bloc-batterie (10) selon la revendication 8,
dans lequel la partie (240) plaque inférieure comprend une première plaque inférieure (241) en contact avec la pluralité d'éléments (210) de batterie et une seconde plaque inférieure (242) faisant face à la première plaque inférieure (241), et un second point de fusion apte à être fondu thermiquement sur la première plaque inférieure (241).

10. Bloc-batterie (10) selon la revendication 9,
dans lequel le premier point de fusion et le second point de fusion sont verticalement symétriques avec au moins une cellule de batterie interposée entre eux.

11. Véhicule comprenant le bloc-batterie (10) selon l'une quelconque des revendications 1 à 10.
